# EUROPEAN PATENT APPLICATION

(11) **EP 4 411 363 A1**
(43) Date of publication of application: **07.08.2024**
(21) Application number: 22875992.4
(22) Date of filing: 21.09.2022
(51) Int. Cl.: G01N 27/62, G01N 30/34, G01N 30/72, G01N 30/86

(54) **CONTROL METHOD FOR LIQUID CHROMATOGRAPH MASS SPECTROMETRY DEVICE**

(30) Priority: 01.10.2021 JP 2021162591
(71) Applicant: HITACHI HIGH-TECH CORPORATION, Tokyo 105-6409 (JP)
(72) Inventor: SUGAWARA Yuka, Tokyo 105-6409 (JP); YASUDA Hiroyuki, Tokyo 105-6409 (JP); TAMURA Riku, Tokyo 105-6409 (JP); TOMA Tsugunao, Tokyo 105-6409 (JP); HASHIMOTO Yuichiro, Tokyo 105-6409 (JP); SUGIYAMA Masuyuki, Tokyo 100-8280 (JP)
(74) Representative: MERH-IP Matias Erny Reichl Hoffmann Patentanwälte PartG mbB
(86) International application number: PCT/JP2022/035211
(87) International publication number: WO 2023/054125

(57) **Abstract**

To provide a method for controlling a liquid chromatograph mass spectrometer by which contamination of a mobile phase solvent caused by a foreign substance can be detected without using an internal standard substance. The method for controlling a liquid chromatograph mass spectrometer according to the present disclosure includes: calculating a first ratio of signal intensities at a first time point and a second time point when measurement is performed using a first mobile phase solvent; calculating a second ratio of signal intensities at the first time point and the second time point when measurement is further performed using a second mobile phase solvent; and determining whether or not the second mobile phase solvent is contaminated according to an absolute difference between the first ratio and the second ratio.

## Description

### [Technical Field]

The present disclosure relates to a method for controlling a mass spectrometer.

### [Background Art]

A mobile phase solvent used in measurement by a liquid chromatograph mass spectrometer (LC/MS) contacts a solvent bottle, a tube group and a filter group of a synthetic resin system, and so on. A substance attached to a constituent of the solvent bottle, the tube group, and the filter group and the surface of them is gradually solved in the mobile phase solvent as the time elapses, and possibly becomes a foreign substance contaminating the mobile phase solvent. When the mobile phase solvent is contaminated by a foreign substance, a phenomenon that ionization of a measurement object substance intrinsically desired to be ionized is suppressed (ion suppression) occurs, and the measurement sensitivity of the measurement object substance deteriorates.

In Patent Literature 1 described below, measurement is performed adding an internal standard substance to a mobile phase solvent, and when the intensity of the internal standard substance becomes less than a reference, it is determined that the ion suppression has occurred (refer to the abstract).

### [Citation List]

### [Patent Literature]

Patent Literature 1: WO09/123297

### [Summary of Invention]

### [Technical Problem]

In a prior art of adding an internal standard substance as described in Patent Literature 1, the internal standard substance itself possibly becomes a foreign substance contaminating the mobile phase solvent. Therefore, such technology is required that can detect contamination of a mobile phase solvent without adding a substance that possibly becomes a foreign substance.

The present disclosure has been made in view of such technical problems as described above, and its object is to provide a method for controlling a liquid chromatograph mass spectrometer by which contamination of a mobile phase solvent caused by a foreign substance can be detected without using an internal standard substance.

### [Solution to Problem]

The method for controlling a liquid chromatograph mass spectrometer related to the present disclosure includes: calculating a first ratio of signal intensities at a first time point and a second time point when measurement is performed using a first mobile phase solvent; calculating a second ratio of signal intensities at the first time point and the second time point when measurement is further performed using a second mobile phase solvent; and determining whether or not the second mobile phase solvent is contaminated according to an absolute difference between the first ratio and the second ratio.

### [Advantageous Effects of Invention]

According to the method for controlling a liquid chromatograph mass spectrometer related to the present disclosure, contamination of a mobile phase solvent caused by a foreign substance can be detected without using an internal standard substance. Problems, configurations, and effects other than those described above will be clarified by explanation of embodiments described below.

### [Brief Description of Drawings]

[FIG. 1] FIG. 1 shows a device configuration of a mass spectrometer 5 according to a first embodiment.
[FIG. 2] FIG. 2 is a graph illustrating a measurement result of a chromatogram signal.
[FIG. 3A] FIG. 3A is a flowchart illustrating a procedure for determining whether or not a second mobile phase solvent is contaminated.
[FIG. 3B] FIG. 3B is a flowchart illustrating another procedure for determining whether or not the second mobile phase solvent is contaminated.
[FIG. 4A] FIG. 4A is an example of a total ion chromatogram obtained by operating the mass spectrometer 5 in a scan mode.
[FIG. 4B] FIG. 4B shows an example of a measurement result of ion signal intensities in FIG. 4A.

### [Description of Embodiments]

### First Embodiment

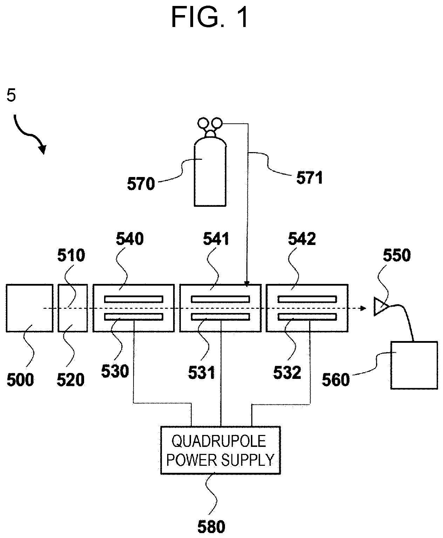

FIG. 1 shows a device configuration of the mass spectrometer 5 according to the first embodiment of the present disclosure. A measurement sample fed by a pump of a liquid chromatograph and the like is ionized by an ion source 500. Since the ion source 500 is under the atmospheric pressure and the mass spectrometer 5 operates under vacuum, an ion 510 is introduced into the mass spectrometer through an interface 520 of the atmospheric air and the vacuum.

Although ions generated by the ion source have various masses, AC voltage (HF voltage) and DC voltage allowing a target ion to pass through are applied to a first quadrupole electrode portion 540 (there is a quadrupole electrode 530 in the inside) by a quadrupole power supply 580, and only the target ion derived from the measurement sample is made to selectively pass through. To a second quadrupole electrode portion 541, a collision gas 570 (nitrogen gas, argon gas, and the like) for dissociating the target ion is introduced from a supply source through a gas line 571.

A second quadrupole electrode 531 normally applies only AC voltage from a quadrupole power supply 580 to eliminate mass selectivity, allows the target ion having passed through the first quadrupole electrode portion 540 and the gas to collide on each other, and thereby generates a fragment ion. The fragment ion having been generated passes through the second quadrupole electrode portion 541, and enters a third quadrupole electrode portion 542.

When HF voltage and DC voltage allowing the target fragment ion to pass through are applied to a third quadrupole electrode 532 by the quadrupole power supply 580, only the target fragment ion passes through the third quadrupole electrode portion 542. The target fragment ion having passed through is detected by a detector 550. A detection signal is sent to a data processing unit 560 (controller), and mass spectrometry is performed by the data processing unit 560.

Although a device aspect of a triple quadrupole type mass spectrometer called a Triple QMS was shown here as an example, the technology of the present disclosure can be applied also to a Single QMS quadrupole mass spectrometer where one unit of the QMF is arranged in the inside. Further, according to the embodiment, although explanation will be made with an example of the quadrupole as the mass filter, the technology of the present disclosure can be applied to a mass filter of not only the quadrupole but also of the multiple pole.

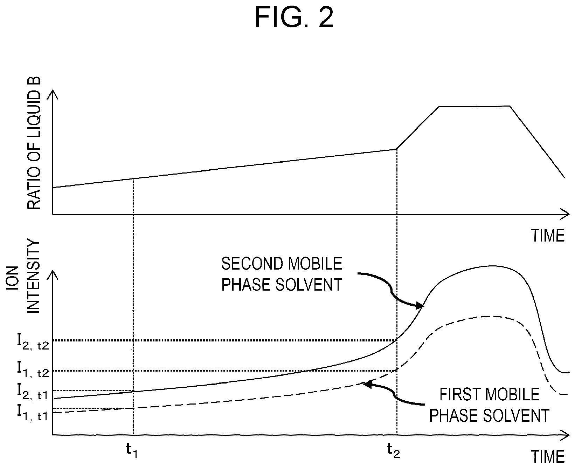

FIG. 2 is a graph illustrating a measurement result of a chromatogram signal. Here, it is assumed that each of the first mobile phase solvent and the second mobile phase solvent is a mixed liquid of the liquid A (deionized water) and the liquid B (methanol). When the liquid B ratio within the mobile phase solvent changed over time as the upper stage of FIG. 2, the blank sample was measured by a gradient elution method using the mass spectrometer 5. The horizontal axis of FIG. 2 shows the elapsed time from the start of elution. The vertical axis of the lower stage of FIG. 2 shows the ion signal intensity acquired by that the mass spectrometer 5 measures the blank sample.

First, the mass spectrometer 5 measures the ion signal intensity using the first mobile phase solvent. The first mobile phase solvent is a mobile phase solvent not contaminated. Followings for example can be used as the first mobile phase solvent: (a) a mobile phase solvent not long after preparation; (b) a mobile phase solvent having been stored under a condition where the temperature and the humidity were managed after preparation until the time of use (refrigerator and the like). With the time point of starting elution using the first mobile phase solvent being made the time point 0, the mass spectrometer 5 measures the ion signal intensity I_{1, t1} at the time point ₜ₁ and the ion signal intensity I_{1, t2} at the time point t2 respectively. The time point ₜ₁ and the time point t2 are made the temporal points where the composition ratio (the liquid B ratio in FIG. 2) of the solvent is different from each other. The mass spectrometer 5 calculates the ratio R₁ of each ion signal intensity as follows: I_{1, t2}/I_{1, t1}=R₁.

Next, the mass spectrometer 5 measures the ion signal intensity using the second mobile phase solvent. The second mobile phase solvent is a determination object for determining whether or not there is contamination. The second mobile phase solvent is a mobile phase solvent that is not the first mobile phase solvent at least, and includes for example such first mobile phase solvent that the time elapses after being arranged in the mass spectrometer 5. With the time point of starting elution using the second mobile phase solvent being made the time point 0, the mass spectrometer 5 measures respectively the ion signal intensity I_{2, t1} and I₂, ₜ₂ at the time t1 and t2 which are same to those for the first mobile phase solvent. The mass spectrometer 5 calculates the ratio R₂ of each ion signal intensity as follows: I_{2, t2}/I_{2, t1}=R₂.

When the second mobile phase solvent is contaminated and contains the foreign substance much, it is considered that the ion signal intensity rises more than the time of non-contamination accompanying rise of the liquid B ratio by the effect. Utilizing the effect, by comparison of R₁ and R₂, it is possible to determine whether or not the second mobile phase solvent is contaminated. In concrete terms, when R₂/R₁ or R₂-R₁ is a threshold or more (namely when the both deviate from each other largely and the absolute difference of the both is a threshold or more), it is determined that the mobile phase solvent used in measurement of R₂ is contaminated.

According to the temporal change of the liquid B ratio (namely the degree of the gradient in the gradient method) and the characteristic of the mobile phase solvent, and so on, it is possible that the rise rate of the ion signal intensity is smaller when the second mobile phase solvent is contaminated (namely R₂<R₁). Even in this case, similar determination can be performed by whether or not R₁/R₂ or R₁-R₂ is a threshold or more.

Since the magnitude relationship of R₁ and R₂ at the time of contamination can be grasped beforehand according to the kind of the mobile phase solvent, and so on, it is also possible to grasp beforehand which calculation expression of (a) R₂/R₁ or R₂-R₁ and (b) R₁/R₂ or R₁-R₂ should be used. When it is not clear which of R₁ and R₂ is bigger due to some circumstances, similar determination may be performed by whether or not the absolute difference |R₂-R₁| is a threshold or more.

It is preferable that the time point t1 and the time point t2 are to be set so as to avoid a time assumed as the elution time of an object substance measured by the mass spectrometer 5. The reason is that, although measurement of FIG. 2 is performed using a blank sample, an object substance of former measurement carries over, and an ion signal of the carried over object substance may be superimposed when the elution time of the object substance elapses. Also, the object substance mentioned here means a substance scheduled to be measured by the mass spectrometer 5 using such temporal change of the liquid B ratio as shown in the upper stage of FIG. 2.

A method for performing the measurement shown in FIG. 2 will be supplemented. After operating the mass spectrometer 5 with a selective ion monitoring (SIM) mode, a multiple reaction monitoring (MRM) mode, and the like for example, only an ion having an optional m/z value is measured. From a mass chromatogram signal value (ion signal) obtained by this measurement, the measurement result as shown in FIG. 2 can be obtained.

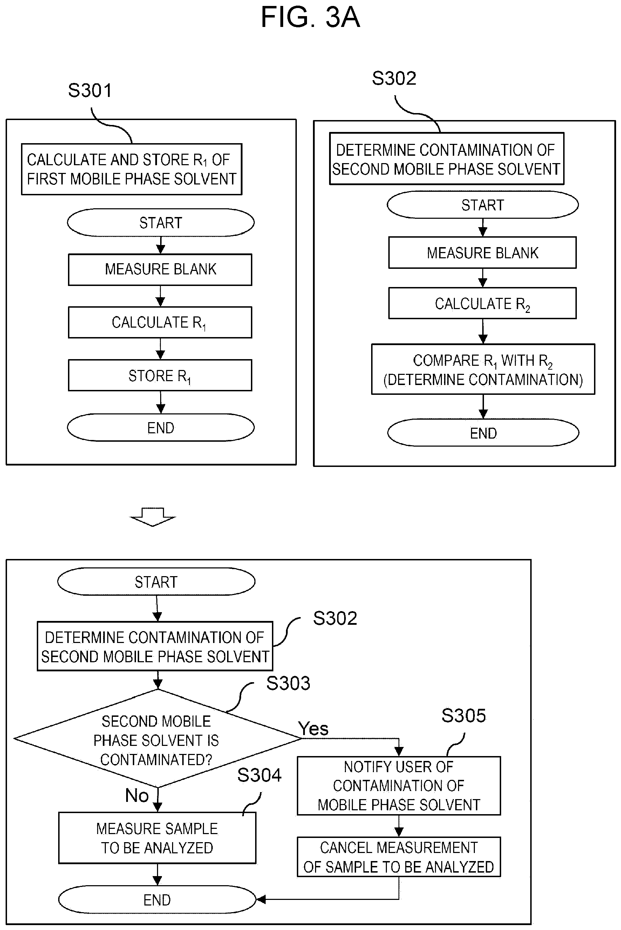

FIG. 3A is a flowchart illustrating a procedure for determining whether or not the second mobile phase solvent is contaminated. In step S301, the mass spectrometer 5 calculates R₁ using the first mobile phase solvent by the procedure explained in FIG. 2, and stores the result in a storage device and the like. After S301, at a temporal point for determining contamination of the second mobile phase solvent, step S302 is started. In step S302, the mass spectrometer 5 calculates R₂ using the second mobile phase solvent by a procedure explained in FIG. 2, and compares the result with R₁.

S301 can be performed for example when a user interface (for example a button on the device, an operation component on a screen interface, and so on) provided in the mass spectrometer 5 is operated. S302 can be performed when the user wants to determine contamination of the second mobile phase solvent. For example, S302 and onward may be performed while an object substance is measured, or S302 only (S303 and onward according to the necessity) may be performed independently in a vacant time when an object substance is not measured.

In step S303, the mass spectrometer 5 determines whether or not the second mobile phase solvent is contaminated based on the comparison result of R₁ and R₂. When the second mobile phase solvent is not contaminated, an analysis object sample is measured (S304). When the second mobile phase solvent is contaminated, the user is notified of the effect, and measurement of the analysis object sample is canceled (S305).

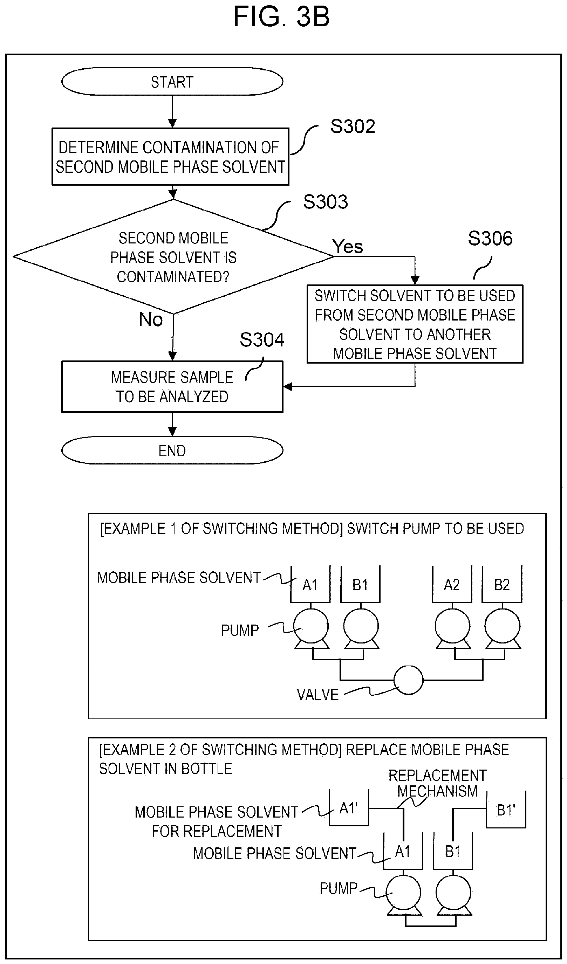

FIG. 3B is a flowchart illustrating another procedure for determining whether or not the second mobile phase solvent is contaminated. S301 to S304 are same to those of FIG. 3A. In FIG. 3B, S306 is performed instead of S305. In S306, the mass spectrometer 5 switches the solvent to be used from the second mobile phase solvent to another mobile phase solvent. With respect to the switching method, such example as described below for example is possible.

### (FIG. 3B: step S306: first example of switching method)

There is a case that plural sets of combinations of a container storing the liquid A and a container storing the liquid B are connected to the mass spectrometer 5 through a valve. For example, there is such case as illustrated in the first example of FIG. 3B that two sets of the liquid A and the liquid B are connected through a valve. In this case, the connection destination of the valve (namely the liquid route for acquiring the mobile phase solvent) can be switched from the set of A1 and B 1 to the set of A2 and B2.

### (FIG. 3B: step S306: second example of switching method)

When the mass spectrometer 5 is provided with a mechanism for replacing the mobile phase solvent within the container, the second mobile phase solvent within the container may be replaced by another mobile phase solvent using the mechanism. In the example illustrated in FIG. 3B, the liquid A1 of the second mobile phase solvent is replaced by the liquid A1', and the liquid B 1 of the second mobile phase solvent is replaced by the liquid B 1' .

It is also possible to switch the second mobile phase solvent to another mobile phase solvent, to measure thereafter the ion signal intensity and to calculate R₂ at the time points t1 and t2 again with respect to the mobile phase solvent, and to determine contamination of the second mobile phase solvent again. Further, when the mobile phase solvent after switching is fresh and equivalent to the first mobile phase solvent, it is also possible to deem that the first mobile phase solvent has been re-introduced, to measure the ion signal intensity and to recalculate R₁ at the time points t1 and t2 again.

### First Embodiment: Summary

The mass spectrometer 5 according to the present first embodiment calculates the ratio R₁ of the ion signal intensities at the time points t1 and t2 respectively when the blank sample is measured using the first mobile phase solvent and the ratio R₂ of the ion signal intensities at the time points t1 and t2 respectively when the blank sample is measured using the second mobile phase solvent, compares their difference or ratio with a threshold, and thereby determines whether or not the second mobile phase solvent is contaminated. Thus, since presence and absence of the contamination can be determined without adding an internal standard substance, it can be avoided that the internal standard substance itself acts as a foreign substance.

The mass spectrometer 5 according to the present first embodiment determines contamination of the second mobile phase solvent using the ratio of the ion signal intensities (both of R₁ and R₂ are calculated as the ratio of the ion signal intensities at the time points t1 and t2 respectively). Instead of the value itself of the ion signal intensity, the ratio of the ion signals of different time points respectively is used, contamination can be thereby determined after suppressing an effect of the machine difference of the device.

When it is determined that the second mobile phase solvent is contaminated, the mass spectrometer 5 according to the present first embodiment notifies the user of the effect and cancels the measurement, or performs measurement after replacing the second mobile phase solvent by another mobile phase solvent. Thus, such event can be avoided that the second mobile phase solvent having been contaminated is used as it is to acquire an erroneous measurement result.

### Second Embodiment

In the first embodiment, explanation was made with an example of measuring the ion signal intensities with respect to specific m/z only. Alternatively, it is also possible to scan a certain range of m/z and to use an ion signal value obtained in the scanning. In the second embodiment of the present disclosure, an example of it will be explained. The configuration of the mass spectrometer 5 is same to that of the first embodiment.

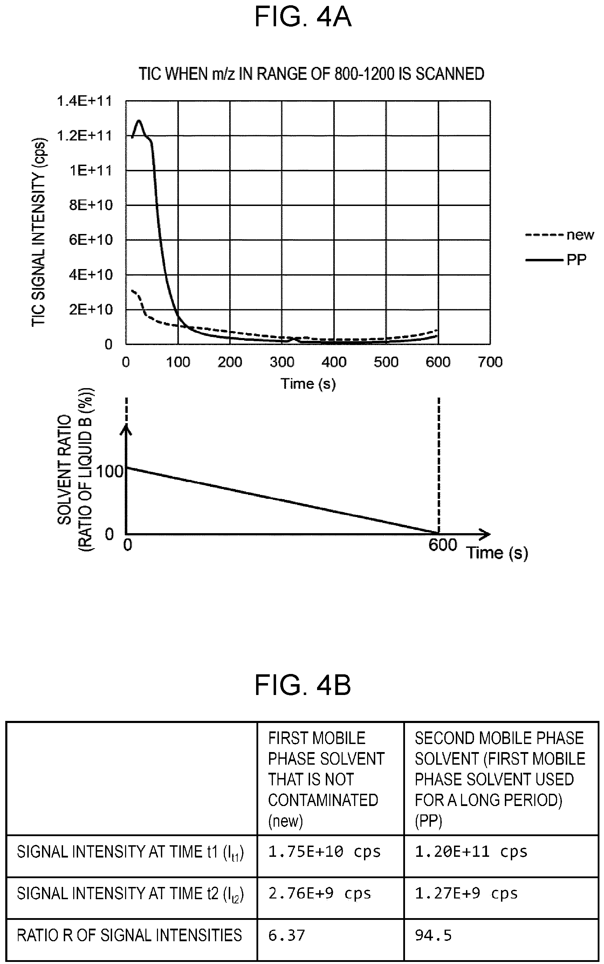

FIG. 4A is an example of a total ion chromatogram obtained by operating the mass spectrometer 5 in a scan mode. The scan mode is a measurement operation for acquiring an ion detection signal in a certain range of m/z. By adding the ion detection signal of all of m/z, a total ion chromatogram is obtained. On the other hand, the SIM mode explained in the first embodiment is different from the scan mode in a point of the measuring operation for obtaining an ion detection signal with respect to a specific m/z only.

The mass spectrometer 5 measures the ion detection signal with respect to each of the first mobile phase solvent (one expressed as "new" in FIG. 4A) and the second mobile phase solvent (one expressed as "PP" in FIG. 4A) using a blank sample similarly to the first embodiment. The solvent ratio is assumed to change as shown in the lower stage of FIG. 4A. The mass spectrometer 5 measures the ion signal intensities in each of the time points t1 and t2 similarly to the first embodiment, and calculates the ratio R₁ and R₂ of the ion signal intensities.

FIG. 4B shows an example of a measurement result of the ion signal intensities in FIG. 4A. In the example, it was revealed that Ri=6.37 and R₂=94.5. When R₂/R₁ or R₂-R₁ is a threshold or more, it is determined that the second mobile phase solvent is contaminated. FIG. 4B shows a numerical value example in a case that the second mobile phase solvent is contaminated.

### Third Embodiment

In the second embodiment, the mass spectrometer 5 performs the scan mode, and the total ion chromatogram is thereby obtained with respect to a certain range of m/z. The ion signal obtained then is plotted on the vertical axis, m/z is plotted on the horizontal axis, and a mass spectrum is thereby obtained simultaneously. Using this mass spectrum, the composition and the amount of a foreign substance contained within the second mobile phase solvent can be analyzed. Along with the contamination determination result, the mass spectrometer 5 may produce an analysis result of it. However, since the measurement accuracy in the scan mode is lower than that in the SIM mode and the MRM mode, it is considered to be preferable that the composition and the amount of the foreign substance analyzed by the scan mode are to be deemed as a surmised result.

### Fourth Embodiment

In the SIM mode and the MRM mode of the mass spectrometer 5, an ion signal is obtained with respect to a single m/z only, and therefore there are advantages that the measurement time is short and many data points are obtained (namely the resolution of the measurement result is high). However, the mass spectrum cannot be obtained. On the other hand, in the scan mode, since an ion signal is obtained over a m/z range of a certain degree, there is an advantage that a mass spectrum can be obtained although the measurement time is long. It is also possible to combine these modes and to use the advantages of the both.

For example, in order to determine whether or not the second mobile phase solvent is contaminated, the SIM mode or the MRM mode is performed first to acquire a chromatogram signal intensity, and the flowchart of FIG. 3A to FIG. 3B is performed using the chromatogram signal intensity. When it is determined that the second mobile phase solvent is contaminated, a mass spectrum is obtained by performing the scan mode, and the composition and the amount of a foreign substance contained within the second mobile phase solvent are analyzed using the mass spectrum. By combination of such modes, since the foreign substance comes to be analyzed by the scan mode only at the time of contamination while performing measurement quickly at normal times, both of the measurement efficiency and analysis of the foreign substance can be achieved.

### On Modification of the Present Disclosure

Also, the present disclosure is not to be limited to the embodiments described above, and various modifications are to be included. For example, the embodiments described above were explained in detail for easy understanding of the present disclosure, and are not to be necessarily limited to those including all configurations explained. Also, a part of a configuration of an embodiment can be replaced by a configuration of another embodiment, and a configuration of an embodiment can be added with a configuration of another embodiment. Also, with respect to a part of a configuration of each embodiment, it is possible to add, delete, and substitute other configurations. Further, the control line and the information line are shown for those considered to be necessary for explanation, and all control lines and information lines of the product have not necessarily been shown. In fact, it can be considered that almost all configurations are connected to each other.

In the embodiments described above, explanation was made on a premise that the first mobile phase solvent (or a separate fresh mobile phase solvent in replacing the second mobile phase solvent) was not contaminated. Although it is preferable that the first mobile phase solvent is not contaminated since the first mobile phase solvent becomes a reference of presence and absence of contamination, when it can be secured that the degree of contamination is less than a predetermined reference value according to a required determination accuracy and the like for example, such mobile phase solvent may be used as the first mobile phase solvent.

In the embodiments described above, each flowchart can be performed by a calculation device such as the data processing unit 560 for example, and may be performed also by that an operator operates manually the mass spectrometer 5.

### [Reference Signs List]

5: mass spectrometer
500: ion source
510: ion
520: interface
530: quadrupole electrode
531: second quadrupole electrode
532: third quadrupole electrode
540: first quadrupole electrode portion
541: second quadrupole electrode portion
542: third quadrupole electrode portion
550: detector
560: data processing unit
580: quadrupole power supply
570: collision gas
571: gas line

## Claims

1. A method for controlling a liquid chromatograph mass spectrometer, the control method comprising:
a step of calculating a first ratio of chromatogram signal intensities at two different time points, the chromatogram signal intensities being obtained by measuring a blank sample with a gradient elution method by using a first mobile phase solvent having a degree of contamination less than a reference value;
a step of calculating a second ratio of chromatogram signal intensities at the two different time points, the chromatogram signal intensities being obtained by measuring a blank sample with the gradient elution method by using a second mobile phase solvent having the same composition as the first mobile phase solvent; and
a step of determining whether or not the second mobile phase solvent is contaminated by using the first ratio and the second ratio, wherein
in the step of calculating the first ratio, a ratio between a chromatogram signal intensity at a first time point at which a first time elapses from start of elution using the first mobile phase solvent and a chromatogram signal intensity at a second time point at which a solvent ratio is different from that of the first time point and at which a second time elapses is calculated as the first ratio,
in the step of calculating the second ratio, a ratio between a chromatogram signal intensity at a time point at which the first time elapses from start of elution using the second mobile phase solvent and a chromatogram signal intensity at a time point at which the second time elapses is calculated as the second ratio, and
in the determining step, it is determined that the second mobile phase solvent is contaminated when an absolute difference between the first ratio and the second ratio is equal to or greater than a threshold value.

2. The control method according to claim 1, wherein
each of the first time point and the second time point is set to be different from a time point at which an elution time of a target substance to be measured by the liquid chromatograph mass spectrometer using the solvent ratio at each of the first time point and the second time point is scheduled to elapse.

3. The control method according to claim 1, further comprising:
a step of notifying, when it is determined in the determining step that the second mobile phase solvent is contaminated, a user of the result; and
a step of starting, when it is determined in the determining step that the second mobile phase solvent is not contaminated, measurement of a target substance to be measured by the liquid chromatograph mass spectrometer.

4. The control method according to claim 1, further comprising:
a step of switching the second mobile phase solvent to another mobile phase solvent when it is determined in the determining step that the second mobile phase solvent is contaminated; and
a step of starting, when it is determined in the determining step that the second mobile phase solvent is not contaminated, measurement of a target substance to be measured by the liquid chromatograph mass spectrometer.

5. The control method according to claim 4, wherein
the liquid chromatograph mass spectrometer includes a container containing a third mobile phase solvent having the same composition as the second mobile phase solvent, and
in the step of switching to the another mobile phase solvent, the second mobile phase solvent is switched to the another mobile phase solvent by switching a path, through which a mobile phase solvent is acquired, from a container containing the second mobile phase solvent to the container containing the third mobile phase solvent.

6. The control method according to claim 4, wherein
the liquid chromatograph mass spectrometer includes a mechanism configured to replace the second mobile phase solvent in a container containing the second mobile phase solvent with the second mobile phase solvent that is not contaminated, and
in the step of switching to the another mobile phase solvent, the second mobile phase solvent is switched to the another mobile phase solvent by replacing, using the mechanism, the second mobile phase solvent in the container containing the second mobile phase solvent with the second mobile phase solvent that is not contaminated.

7. The control method according to claim 4, wherein
after the step of switching to the another mobile phase solvent, the step of calculating the second ratio and the determining step are performed again.

8. The control method according to claim 4, further comprising:
a step of recalculating the first ratio using the another mobile phase solvent after the step of switching to the another mobile phase solvent.

9. The control method according to claim 1, further comprising:
a step of measuring only an ion signal of specific m/z, wherein
in the step of calculating the first ratio and the step of calculating the second ratio, each of the first ratio and the second ratio is calculated by using a chromatogram signal obtained in the step of measuring only the ion signal of the specific m/z.

10. The control method according to claim 1, further comprising:
a step of measuring an ion signal of m/z included in a specific range by scanning within the range, wherein
in the step of calculating the first ratio and the step of calculating the second ratio, each of the first ratio and the second ratio is calculated by using a total ion chromatogram signal obtained in the step of measuring the ion signal by the scanning.

11. The control method according to claim 10, further comprising:
a step of estimating a foreign substance in the second mobile phase solvent and an amount of the foreign substance by using a mass spectrum obtained in the step of measuring the ion signal by the scanning.

12. The control method according to claim 1, further comprising:
a step of measuring only an ion signal of specific m/z, wherein
in the step of calculating the first ratio and the step of calculating the second ratio, each of the first ratio and the second ratio is calculated by using a chromatogram signal obtained in the step of measuring only the ion signal of the specific m/z, and
the method further comprises:
a step of measuring, when it is determined in the determining step that the second mobile phase solvent is contaminated, an ion signal of m/z included in a specific range by scanning within the range; and
a step of estimating a foreign substance in the second mobile phase solvent and an amount of the foreign substance by using a mass spectrum obtained in the step of measuring the ion signal by the scanning.

13. The control method according to claim 1, wherein
the step of calculating the second ratio and the determining step are performed in a vacant time during which a target substance to be measured by the liquid chromatograph mass spectrometer using the solvent ratio at each of the first time point and the second time point is not measured.

14. A liquid chromatograph apparatus, comprising: a controller configured to perform the method according to claim 1.
